# EUROPEAN PATENT SPECIFICATION

(11) **EP 3 593 942 B1**
(45) Date of publication and mention of the grant of the patent: **18.09.2024**
(21) Application number: 19195953.5
(22) Date of filing: 30.10.2017
(51) Int. Cl.: B23Q 7/04, B23Q 7/14, B23Q 7/10, B23Q 17/00

(54) **MACHINING CONTROL DEVICE**
BEARBEITUNGSSTEUERUNGSVORRICHTUNG
DISPOSITIF DE COMMANDE D'USINAGE

(30) Priority: 01.11.2016 JP 2016214028
(43) Date of publication of application: 15.01.2020
(62) Divisional of application: 17199181.3
(73) Proprietor: Roland DG Corporation, Hamamatsu-shi, Shizuoka 431-2103 (JP)
(72) Inventor: SUYAMA, Akihiro, Hamamatsu-shi, Shizuoka 431-2103 (JP)
(74) Representative: Grünecker Patent- und Rechtsanwälte PartG mbB

(56) References cited:
- EP-A1- 1 658 825
- JP-A- S62 114 852
- JP-U- S61 154 658

## Description

### Technical field

The present invention relates to a machining control device.

### Background art

JP-A-2006-142029 discloses a machining system including a workstation, a central storage device, and a machining device. Workpieces (blanks) are provided with identification codes and machining data for the workpieces are stored on the central storage device or the workstation. When the machining device reads an identification code of a workpiece, it retrieves machining data corresponding to that identification code from the central storage device or the workstation, and uses the retrieved machining data to machine the workpiece. JP-A-2006-142029, however, does not disclose how to determine and designate machining data from the identification code read by the machining device, and it is unclear in what way the machining data are stored on the central storage device or the workstation.

U. S. Patent No. 9,242,327 discloses a machining device. In this machining device, a plurality of workpieces are aligned and mounted on a wheel at its periphery. A designated one workpiece is loaded into a machining device unit (main unit) by a slide and that workpiece is machined in the machining device unit. U. S. Patent No. 9,242,327, however, does not disclose how to determine and designate one workpiece among the workpieces mounted on the wheel. Accordingly, if a user misidentifies a mounting position of a workpiece on the wheel, a wrong workpiece can be loaded and machined in the machining device unit.

JP S61 154658U, on which the preamble of appended claim 1 is based, discloses a machining control device.

The present invention was made with respect to the above, and an object of the present invention is to prevent a wrong workpiece from being loaded and machined in a machining device unit.

### Summary of the invention

In order to achieve the aforementioned object, a main invention is a machining device including: a machining device unit; a loading mechanism for storing a plurality of workpiece-attachable and -detachable holders provided with a unique identifier for each and loading and unloading one of the holders into and from the machining device unit; reading means for reading the unique identifiers of the holders, the reading means being disposed in the loading mechanism; and a control unit for causing, in response to a reception of a designated identifier, the loading mechanism to perform a loading operation to load, into the machining device unit, a holder having a unique identifier that is identical to the designated identifier among the unique identifiers read by the reading means. The material data includes segment data in which an area within a contour of the workpiece on a plane view of the workpiece is divided into a machined area and an un-machined area, and the machined area and the un-machined area are distinguishable. The material data further includes an identifier, material type data, thickness data, and color data.

Other features of the present invention will be clarified by the description of the specification and the drawings described later.

### Effect of the invention

According to the present invention, it is possible to load a correct holder having a unique identifier identical to a designated identifier and a workpiece held in that holder into a machining device unit.

### Brief description of the drawings

Fig. 1 is a perspective view of a machining system;
Fig. 2 is a block diagram of the machining system;
Fig. 3 is a front view of a machining device, with a housing of a machining device unit and a housing of a loading mechanism broken;

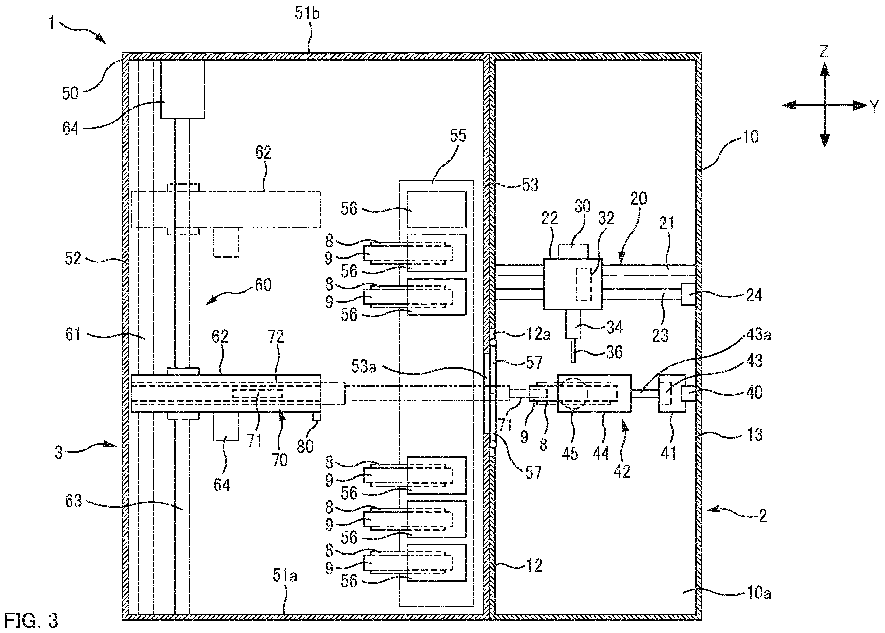

Fig. 3 is a top view of the machining device, with the housing of the machining device unit and the housing of the loading mechanism broken; and

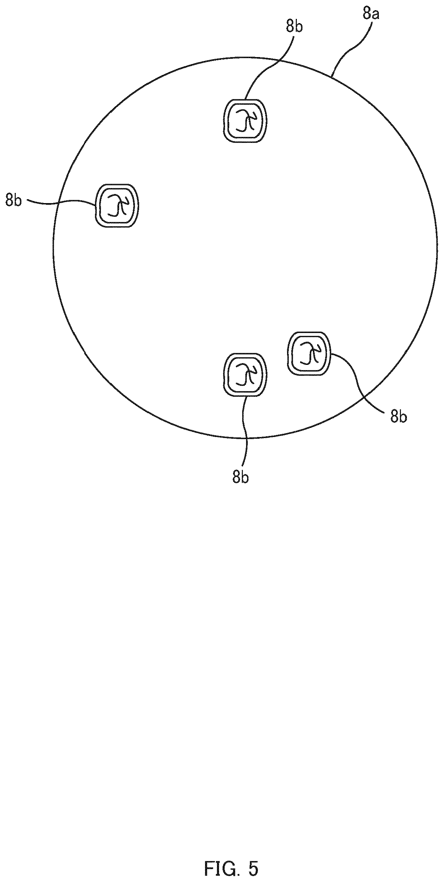

Fig. 5 shows a diagrammatic representation of segment data included in a material information file.

### Detailed description of the invention

At least the following embodiments will be shown according to the description and drawings described below.

A machining device including: a machining device unit; a loading mechanism for storing a plurality of workpiece-attachable and -detachable holders provided with a unique identifier for each and loading and unloading one of the holders into and from the machining device unit; reading means for reading the unique identifiers of the holders, the reading means being disposed in the loading mechanism; and a control unit for causing, in response to a reception of a designated identifier, the loading mechanism to perform a loading operation to load, into the machining device unit, a holder having a unique identifier that is identical to the designated identifier among the unique identifiers read by the reading means will be shown.

A machining system including: a machining control device; and a machining device, wherein the machining control device includes: acquisition means for acquiring a designated identifier; and transfer means for transferring the designated identifier acquired by the acquisition means to the machining device, and wherein the machining device includes: a machining device unit; a loading mechanism for storing a plurality of workpiece-attachable and -detachable holders provided with a unique identifier for each and loading and unloading one of the holders into and from the machining device unit; reading means for reading the unique identifiers of the holders, the reading means being disposed in the loading mechanism; and a control unit for causing, in response to a reception of the designated identifier transferred by the transfer means, the loading mechanism to perform a loading operation to load, into the machining device unit, a holder having a unique identifier that is identical to the designated identifier among the unique identifiers read by the reading means will be shown.

According to the above, the unique identifiers of the holders are read by the reading means, so that a correct holder having a unique identifier that is identical to the designated identifier and a correct workpiece attached to that holder can be loaded into the machining device unit.

Preferably, in the machining device, the control unit causes, after the loading operation, the machining device unit to perform a machining operation to machine a workpiece attached to the holder loaded in the machining device unit.

More preferably, the control unit causes, after the machining operation, the loading mechanism to perform an unloading operation to unload the holder loaded in the machining device unit.

Preferably, in the machining system, the machining control device further includes: second acquisition means for acquiring the unique identifiers of the holders; generating means for generating material data for the workpieces; and recording means for recording, on a storage medium, the unique identifiers acquired by the second acquisition means and the material data generated by the generating means with the unique identifiers and the material data being correlated to each other.

More preferably, the machining control device further includes: retrieving means for retrieving, from the storage medium, a material data correlated to a unique identifier that is identical to the designated identifier acquired by the acquisition means; and tool path data generating means for generating tool path data based on the material data retrieved by the retrieving means and data indicative of a shape of the workpiece, and wherein: the transfer means transfers, to the machining device, the tool path data generated by the tool path data generating means along with the designated identifier acquired by the acquisition means, and the control unit causes, after the loading operation, the machining device unit to perform a machining operation to machine the workpiece attached to the holder loaded into the machining device unit, according to the tool path data transferred by the transfer means.

According to the above, the holders and the workpieces are correlated to the material data using the unique identifiers, so that each workpiece is machined according to the tool path data based on the correct material data.

Furthermore, a machining control device including: acquisition means for acquiring a unique identifier of a workpiece-attachable and -detachable holder; generating means for generating material data for the workpiece; and recording means for recording, on a storage medium, the unique identifier acquired by the acquisition means and the material data generated by the generating means with the unique identifiers and the material data being correlated to each other.

According to the above, the holders and the workpieces are correlated to the material data using the unique identifiers.

### === Embodiments ===

Referring to the drawings, an embodiment of the present invention is described. The embodiment described below is, however, provided with technically preferable various limitations in order to implement the present invention. Therefore, the scope of the present invention is not limited to the following embodiment and illustrative examples, but to the appended claims.

### <Machining system>

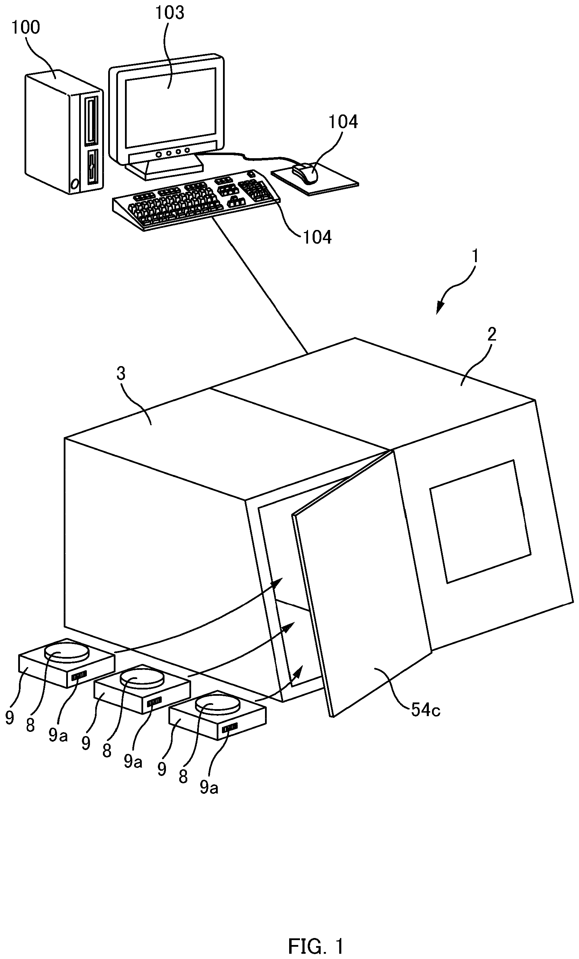

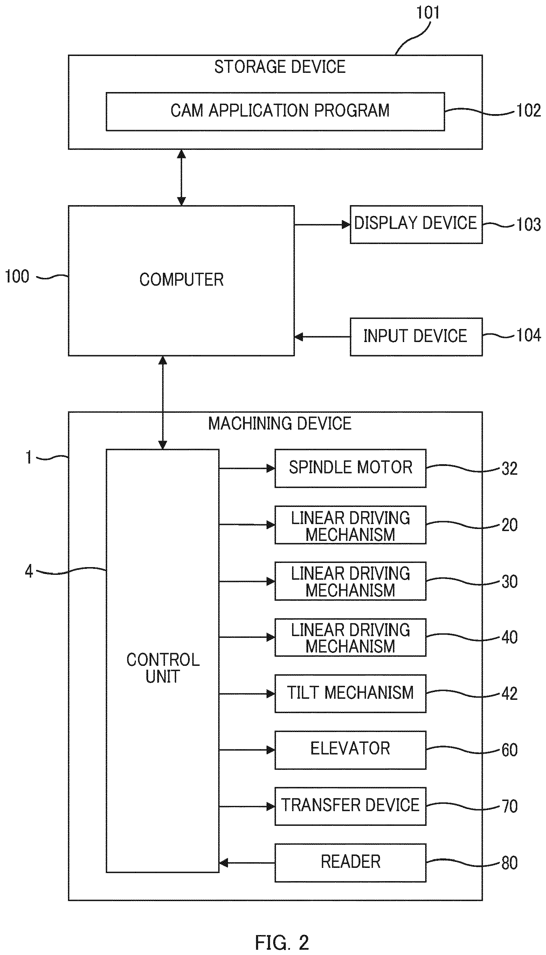

Fig. 1 is a perspective view of a machining system, and Fig. 2 is a block diagram of the machining system.

The machining system includes a machining device 1, a computer (machining control device) 100, and a plurality of holders 9. The machining device 1 includes a machining device unit 2 for machining each workpiece 8 attached to a holder 9, a loading mechanism 3 for loading and unloading the workpieces 8 and the holders 9 into and from the machining device unit, and a control unit 4 for controlling the machining device unit 2 and the loading mechanism.

### <Holders and workpieces>

The holder 9 is for holding a workpiece 8. Each workpiece 8 has a disk-like shape. Each holder 9 has a ring-like shape. The workpiece 8 is held in the holder 9 with the periphery of the workpiece 8 attached to the holder 9. The top and bottom surfaces of the workpiece 8 are exposed without being covered with the holder 9.

Various materials can be used to produce workpieces 8. For example, the workpiece 8 is made of a ceramic material (such as zirconia ceramic material), resin material, glass material, metal material, or wax material.

Each holder 9 is provided with an identifier (hereinafter, referred to as a holder ID) 9a unique to the holder 9. The type of the holder ID 9a is not specifically limited. For example, a two-dimensional code, a one-dimensional code, a mark, a numerical value, a pattern or an image that represents the holder ID 9a may be given on the holder 9. Alternatively, an RF tag or a magnetic medium on which information representing the holder ID 9a is recorded may be adhered to the holder 9. When the holder ID 9a is represented as a two-dimensional code, a one-dimensional code, a mark, a numerical value, a pattern or an image, they may be printed on a sheet and the sheet may be adhered to the holder 9. They may also be directly printed or engraved on the holder 9.

The workpiece 8 can be attached to and detached from the holder 9. Once an un-machined workpiece 8 is attached to the holder 9, that workpiece 8 will not be transferred to another holder 9 before it is consumed. After the workpiece 8 is consumed, it is detached from the holder 9 and a new workpiece 8 is attached to the holder 9.

### <Control unit>

The control unit 4 is an NC servo controller having various driving circuits (such as a motor driver), a microcomputer, and the like.

### <Machining device unit>

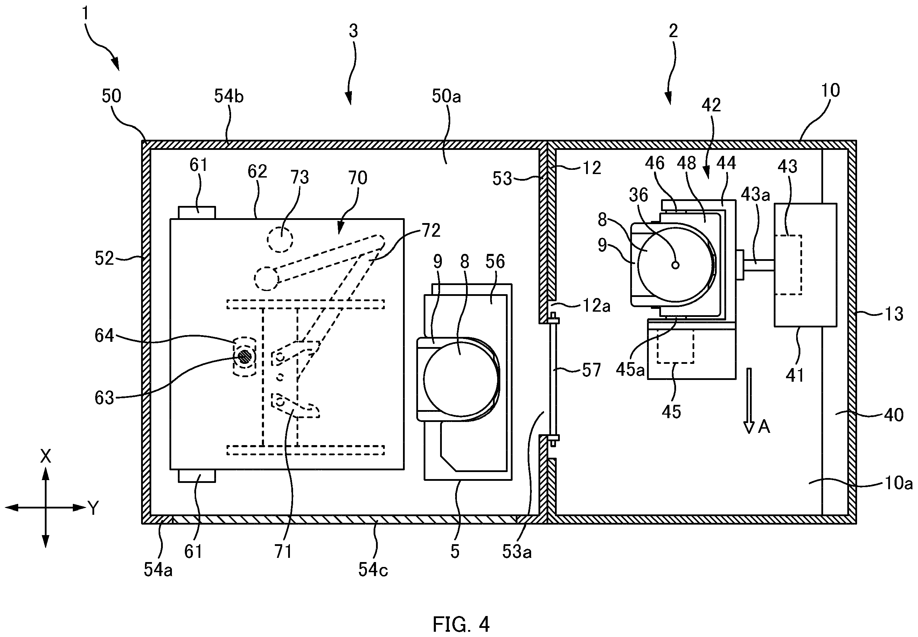

Figs. 3 and 4 are front and top views, respectively, of the machining device 1. In Figs. 3 and 4, X-, Y-, and Z-axes are shown as support lines representing the directions. The X-, Y- and Z-axes are perpendicular to each other. The directions aligned with the X- and Y-axes are parallel to the horizontal and the direction aligned with the Z-axis is parallel to the vertical. The X-axis may be inclined at an angle from the horizontal and the Z-axis may be inclined at an angle from the vertical.

The machining device unit 2 has a housing 10, a spindle motor 32, a tool holding member 34, a cutting tool 36, a tilt mechanism 42, a holding member 48, and a three-dimensional displacement mechanism. The three-dimensional displacement mechanism is for driving the tool holding member 34 so as to move, relative to the holding member 48, the tool holding member 34 in X-, Y- and Z-directions. Specifically, the three-dimensional displacement mechanism is provided with a Z-directional linear driving mechanism 30 that drives the tool holding member 34 so as to move the tool holding member 34 in the Z-direction parallel to the rotation shaft of the spindle motor 32, a Y-directional linear driving mechanism 20 that drives the tool holding member 34 so as to move the tool holding member 34 in the Y-direction, and an X-directional linear driving mechanism 40 that moves the holding member 48 so as to move the holding member 48 in the X-direction.

The housing 10 has a box-like shape and an internal space 10a is formed in the housing 10. An access hole for transfer 12a is formed in a side section 12 of the housing 10.

The Y-directional linear driving mechanism 20 has a linear guide member 21, a carriage 22, a Y-directional linear transmission mechanism 23, and a motor 24. The both ends of the linear guide member 21 are supported by side sections 12 and 13 of the housing 10 so that the linear guide member 21 is held and extends between the side sections 12 and 13. The direction in which the linear guide member 21 extends is aligned with the Y-direction. The carriage 22 is slidably attached to the linear guide member 21. The carriage 22 is provided so that it can be moved in the Y-direction along the linear guide member 21. The carriage 22 is connected to the Y-directional linear transmission mechanism 23. The Y-directional linear transmission mechanism 23 is connected to the motor 24. The Y-directional linear transmission mechanism 23 is disposed between the side sections 12 and 13, and the motor 24 is disposed on the side section 13. The Y-directional linear transmission mechanism 23 is, for example, a belt transmission mechanism, a chain transmission mechanism, a ball screw transmission mechanism or a rack-and-pinion mechanism. The power of the motor 24 is transmitted to the carriage 22 via the Y-directional linear transmission mechanism 23 and therefore, the carriage 22 is moved in the Y-direction by the motor 24.

The carriage 22 is provided with the linear driving mechanism 30, the spindle motor 32, and the tool holding member 34. Specifically, the linear driving mechanism 30 and the spindle motor 32 are attached to the carriage 22 and the tool holding member 34 is connected to the spindle motor 32 and the linear driving mechanism 30 via a transmission mechanism. The linear driving mechanism 30 drives the tool holding member 34 so as to move the tool holding member 34 in the Z-direction and the spindle motor 32 drives the tool holding member 34 on the rotation shaft parallel to the Z-axis. To the tool holding member 34, the cutting tool 36 such as an endmill, a drill, a reamer or a tap is attached. The cutting tool 36 can be attached to and removed from the tool holding member 34. In the housing 10 (such as on a moving unit 41 described below), a magazine is provided in which spare cutting tools are contained.

The X-directional linear driving mechanism 40 is attached to the side section 13 of the housing 10 so that the X-directional linear driving mechanism 40 is aligned parallel to the X-axis. The linear driving mechanism 40 is connected to the moving unit 41. The linear driving mechanism 40 drives the moving unit 41 so as to move the moving unit 41 in the X-direction.

To the moving unit 41, the tilt mechanism 42 and the holding member 48 are attached. The holding member 48 is for holding a workpiece 8. The tilt mechanism 42 is for turning the holding member 48 and the workpiece 8 on a first rotation shaft parallel to the Y-axis and turning the holding member 48 and the workpiece 8 on a second rotation shaft that is perpendicular to the first rotation shaft.

The tilt mechanism 42 has a first motor for turn movement 43, a turn stick 44, and a second motor for turn movement 45. The first motor for turn movement 43 is disposed in the moving unit 41 so that its output rotation shaft (first rotation shaft) 43a is aligned parallel to the Y-axis. The output rotation shaft 43a of the motor 43 extends from the inside to the outside of the moving unit 41 in the Y-direction. The output rotation shaft 43a of the first motor for turn movement 43 is connected to the center of the arch-like turn stick 44. The second motor for turn movement 45 is attached to a periphery of one end of the turn stick 44. An output rotation shaft (second rotation shaft) 45a of the second motor for turn movement 45 passes inward through the one end of the turn stick 44. The output rotation shaft 45a of the second motor for turn movement 45 is perpendicular to the output rotation shaft 43a of the first motor for turn movement 43. The output rotation shaft 45a of the second motor for turn movement 45 is connected to one end of an arch-like holding member 48. The other end of the holding member 48 is connected to the other end of the turn stick 44 through a rotation shaft 46 coaxial with the output rotation shaft 45a of the second motor for turn movement 45.

The workpiece 8 is held by the holding member 48 while supported by the holder 9. The holding member 48 holds the perimeter of the holder 9 by, for example, magnetic attraction, suction, clamping, locking or engagement.

When the first motor for turn movement 43 is operated, the turn stick 44, the holding member 48, and the workpiece 8 are turned about the output rotation shaft 43a. When the second motor for turn movement 45 is operated, the holding member 48, the holder 9, and the workpiece 8 are turned about the output rotation shaft 45a.

### <Machining operations of the machining device unit>

By controlling the spindle motor 32, linear driving mechanism 20 (especially the motor 24), the linear driving mechanism 30, the linear driving mechanism 40, and the tilt mechanism 42 (especially the motors 43 and 45) by the control unit 4, the machining device unit 2 is operated as follows.

The tool holding member 34 and the cutting tool 36 being driven by the spindle motor 32 are moved in the Y-direction by the linear driving mechanism 20 and moved up by the linear driving mechanism 30. The workpiece 8 and the holding member 48 are moved in the X-direction by the linear driving mechanism 40. Accordingly, a relative 3D position of the tip of the cutting tool 36 to the center of the workpiece 8 (the intersection between the first rotation shaft and the second rotation shaft of the tilt mechanism 42) is changed. When the cutting tool 36 contacts the workpiece 8 during the displacement, the workpiece 8 is cut by the cutting tool 36. Furthermore, while the workpiece 8 is being cut, the holding member 48 and the workpiece 8 are turned by the tilt mechanism 42 about the output rotation shafts 43a and 45a of the motors 43 and 45, respectively. This changes a contact angle between the cutting tool 36 and the workpiece 8.

The control unit 4 controls, according to tool path data, the linear driving mechanism 20, the linear driving mechanism 30, the linear driving mechanism 40, and the tilt mechanism 42 using the numerical control (NC) to displace the tip of the cutting tool 36 relative to the center of the workpiece 8. The tool path data is composed of data in which relative 3D positions and inclined angles of the tip of the cutting tool 36 relative to the center of the workpiece 8 are sorted in the order of time and data in which velocities at these positions (i.e., velocities of the linear driving mechanism 20, the linear driving mechanism 30, the linear driving mechanism 40, and the tilt mechanism 42) are sorted in the order of time. The tool path data is generated by the computer 100 and transferred from the computer 100 to the control unit 4. In addition, the tool path data is transferred from the computer 100 to the control unit 4 along with a designated identifier (hereinafter, referred to as a designated ID). The designated ID is for designating one of the holders 9. A holder 9 having a holder ID 9a that is identical to the designated ID is designated. The computer 100 and the designated ID are described more in detail below.

### <Loading mechanism>

The loading mechanism 3 includes a housing 50, a storage stand 55 disposed in the housing 50, a transfer device 70 for transferring the workpiece 8 and the holder 9 so as to deliver the workpiece 8 and the holder 9 in the Y-direction, an elevator 60 for carrying the transfer device 70 up and down in the housing 50, and a reader 80 for reading the holder IDs 9a of the holders 9.

The housing 50 has a box-like shape and an internal space 50a is formed in the housing 50. A side section 53 of the housing 50 is fixed to the side section 12 of the housing 10 of the machining device unit 2, and the housing 50 and the housing 10 are juxtaposed with each other. An access hole for transfer 53a is formed in the side section 53 of housing 50. The access hole for transfer 53a is overlapped with the access hole for transfer 12a in the housing 10, and the internal space 50a of the housing 50 and the internal space 10a of the housing 10 are communicated with each other through the access holes for transfer 12a and 53a.

To the side section 53 of the housing 50, a door 57 for opening and closing the access hole for transfer 53a is provided. The door 57 opens outward from the housing 50 and inward into the housing 10. The door 57 is of the normally closed type which is closed at normal times with biasing means such as a spring.

The storage stand 55 is arranged at a side of the side section 53 of the housing 50. The storage stand 55 can holds a plurality of workpieces 8 arranged vertically, with the longest side of each workpiece aligned horizontally. Specifically, hold shelves 56 are disposed vertically in the storage stand 55. These hold shelves 56 are divided into two groups: upper and lower ones. The distance between the lowermost hold shelf 56 in the upper group and the uppermost hold shelf 56 in the lower group is larger than the distances between other adjacent hold shelves 56. The position (height) of the access hole for transfer 53a in the housing 50 is determined between the lowermost hold shelf 56 in the upper group and the uppermost hold shelf 56 in the lower group. In this embodiment, the number (i.e., three) of the hold shelves 56 in the upper group is equal to the number (i.e., three) of the hold shelves 56 in the lower group, but the number of the hold shelves in each group is not limited to three.

The holder 9 can be inserted into and removed from the hold shelf 56 in the Y-direction. The holder 9 together with the workpiece 8 held by the holder 9 can be inserted into and removed from the hold shelf 56. The direction in which the holder 9 is inserted into the hold shelf 56 is aligned with the direction in which it is delivered from the housing 50 to the housing 10 through the access holes for transfer 12a and 53a. The direction in which the holder 9 is removed from the hold shelf 56 is aligned with the direction in which it is delivered from the housing 10 to the housing 50 through the access holes for transfer 12a and 53a. The hold shelf 56 has a locking mechanism that uses, for example, magnetic attraction, suction, clamping, locking or engagement. The holder 9 held in the hold shelf 56 is fixed to the hold shelf 56 by the locking mechanism, and this lock can be released.

Each hold shelf 56 has an identifier (shelf ID) that is unique to that hold shelf 56. The shelf IDs are stored in the control unit 4, and the control unit 4 can distinguish the hold shelves 56 based on their shelf IDs.

A door 54c is provided on a front section 54a of the housing 50 to allow insertion and removal of the holders 9 and the workpieces 8 into and from the storage stand 55. The door 54c may be provided on a side section 52 or a rear section 54b rather than on the front section 54a.

The elevator 60 is disposed near the side section 52 opposite to the side section 53 in the housing 50. The elevator 60 has linear guide members 61, an elevating unit 62, a linear transmission mechanism 63, and a motor 64. Each linear guide member 61 is attached to the housing 50 so that it extends vertically (in the Z-direction). The elevating unit 62 is slidably attached to the linear guide members 61. The elevating unit 62 is provided so that it can move in the Z-direction along the linear guide members 61 at a location (location for elevation) opposite to the access holes for transfer 12a and 53a relative to the storage stand 55. Furthermore, the elevating unit 62 is connected to the linear transmission mechanism 63, and the linear transmission mechanism 63 is connected to the motor 64. The linear transmission mechanism 63 is disposed between a top 51b and a bottom 51a of the housing 50. The motor 64 is provided on the top 51b of the housing 50. The linear transmission mechanism 63 is, for example, a ball screw transmission mechanism, a rack-and-pinion mechanism, a belt transmission mechanism or a chain transmission mechanism. The power of the motor 64 is transmitted to the elevating unit 62 via the linear transmission mechanism 63 and the elevating unit 62 thus moves in the Z-direction by the motor 64.

As described above, since the Z-axis is perpendicular to or inclined at an angle from the horizontal surface, the elevating unit 62 moves up and down vertically or obliquely relative to the horizontal surface.

The elevating unit 62 is provided with the transfer device 70. The transfer device 70 has a picker (such as a clamping device) 71, a movement mechanism 72 and a motor 73. The movement mechanism 72 is comprised of, for example, an arm mechanism that can be unfolded and folded in the Y-direction. The base of the movement mechanism 72 is attached to the elevating unit 62. The picker 71 is provided at the distal end of the movement mechanism 72. The motor 73 is connected to the movement mechanism 72 and the power of the motor 73 is transmitted to the movement mechanism 72. The movement mechanism 72 is driven by the motor 73. The movement mechanism 72 is unfolded and extended in the Y-direction away from the elevating unit 62 toward the side section 13 and folded and retracted in the Y-direction using the power of the motor 73. The path which the picker 71 follows when it moves in response to the extension and retraction of the movement mechanism 72 is on a straight line that is substantially parallel to the Y-axis. A range over which the picker 71 travels by the movement mechanism 72 falls in an area ranging from the elevating unit 62 to the holding member 48 along the Y-axis.

The picker 71 holds the holder 9 by, for example, magnetic attraction, suction, clamping, locking or engagement. For example, the picker 71 is a clamping device that clamps the holder 9, an electromagnet that can retain the holder 9 by the magnetic force or a nozzle that sucks the holder 9 using a negative pressure.

The elevating unit 62 is equipped with the reader 80. The reader 80 faces the storage stand 55. With the elevating unit 62 positioned at a level of one of the hold shelves 56, the holder ID9a of the holder 9 held by the hold shelf 56 in question is read by the reader 80.

The reader 80 may be an optical reader (such as a one-dimensional code reader and a two-dimensional code reader), a magnetic reader, or a wireless reader (such as an RFID reader).

By controlling the elevator 60 (especially the motor 64) and the transfer device 70 (especially the motor 73) by the control unit 4, the loading mechanism 3 is operated. Operations of the loading mechanism 3 are a scanning operation, a loading operation, and an unloading operation. These operations are described below.

### <Scanning operation of the loading mechanism>

The scanning operation is performed, for example, after the machining device 1 is turned on, before the loading operation described below, after a holder 9 is inserted into a hold shelf 56, or after the door 54c is closed. The insertion of the holder 9 into the hold shelf 56 or the closing of the door 54c are detected via a sensor such as a limit switch.

The scanning operation is for reading the holder IDs 9a of the holders 9 held in the hold shelves 56. Specific details are as follows.

After the elevating unit 62 is moved to a level of one hold shelf 56 (hereinafter, referred to as a certain hold shelf 56) by the motor 64, the holder ID 9a of the holder 9 held in the certain hold shelf 56 (hereinafter, referred to as a certain holder 9) is read by the reader 80. Then, the control unit 4 obtains the holder ID read by the reader 80 and stores it with the shelf ID of the certain hold shelf 56 and the holder ID of the certain holder 9 correlated with each other. As a result, the control unit 4 can recognize the holder ID of the holder 9 held in the certain hold shelf 56.

After that, the holder IDs 9a of the holders 9 held in the hold shelves 56 are read by the reader 80 in a similar manner. The control unit 4 thus stores the shelf IDs of the hold shelves 56 and the holder IDs of the holders 9 held in the hold shelves 56 in correlation with each other. The order of reading the holder IDs 9a is not specifically limited. For example, the holder IDs 9a of the holders 9 may be read downward from the top by the reader 80. Alternatively, the holder IDs 9a of the holders 9 may be read upward from the bottom by the reader 80.

### <Loading operation of the loading mechanism>

The loading operation is performed when the tool path data and the designated ID are transferred from the computer 100 to the control unit 4. If the control unit 4 has no holder ID stored therein at the time of the transfer of the designated ID to the control unit 4, the loading operation is performed after the aforementioned scanning operation.

The loading operation is for transferring a designated one holder 9 among the holders 9 held in the storage stand 55 to the machining device unit 2. Specific details are as follows.

When the designated ID is transferred to the control unit 4, the holder ID that is identical to the designated ID and the shelf ID correlated with it are searched for by the control unit 4. If no holder ID identical to the designated ID is found, the control unit 4 performs an error handling process without the loading operation. The control unit 4 then proceeds to an idle state. The error handling process is a process such as transmission of an error signal to the computer 100 and activation of an alarm (e.g., an LED, a speaker, a light bulb) connected to the control unit 4.

After finding the holder ID and the shelf ID, the control unit 4 controls the motor 64 of the elevator 60. Then, the elevating unit 62 is moved, by the motor 64, to a level of a hold shelf 56 associated with the shelf ID that has been found (hereinafter, referred to as a designated hold shelf 56).

Next, when the control unit 4 controls the transfer device 70, the movement mechanism 72 of the transfer device 70 is once unfolded and extended by the motor 73 and then folded and retracted. As a result, the holder 9 held in the designated hold shelf 56 (hereinafter, referred to as a designated holder 9) is held by the picker 71 and removed from the designated hold shelf 56.

Subsequently, when the control unit 4 controls the elevator 60, the elevating unit 62 moves to the level of the access holes for transfer 12a and 53a by the motor 64.

Next, when the control unit 4 controls the linear driving mechanism 40, the holding member 48 is moved in the X-direction, by the linear driving mechanism 40, to a position where the holding member 48 is aligned along the X-axis with the access holes for transfer 12a and 53a. When the control unit 4 controls the transfer device 70, the movement mechanism 72 of the transfer device 70 is unfolded and extended by the motor 73. As a result, the designated holder 9 is loaded into the holding member 48 and leaves the picker 71. Thereafter, the movement mechanism 72 of the transfer device 70 is folded and retracted by the motor 73. As a result, the picker 71 moves away from the holding member 48 in the Y-direction and enters the housing 50.

After the loading operation as described above, the machining device unit 2 performs the aforementioned machining operation.

### <Unloading operation of the loading mechanism>

The unloading operation is performed after the machining operation performed by the machining device unit 2.

The unloading operation is for transferring the designated holder 9 from the machining device unit 2 to the storage stand 55. Specific details are as follows.

When the control unit 4 controls the linear driving mechanism 40, the holding member 48 is moved in the X-direction, by the linear driving mechanism 40, to a position where the holder 48 is aligned along the X-axis with the access holes for transfer 12a and 53a.

Next, when the control unit 4 controls the elevator 60, the elevating unit 62 moves to the level of the access holes for transfer 12a and 53a by the motor 64.

Subsequently, when the control unit 4 controls the transfer device 70, the movement mechanism 72 of the transfer device 70 is unfolded and extended by the motor 73. As a result, the designated holder 9 is held by the picker 71 and leaves the holding member 48. Then, the movement mechanism 72 of the transfer device 70 is folded and retracted by the motor 73. As a result, the picker 71 and the holder 9 move away from the holding member 48 in the Y-direction and enter the housing 50.

Next, when the control unit 4 controls the elevator 60, the elevating unit 62 moves to the level of the designated hold shelf 56 by the motor 64.

Thereafter, when the control unit 4 controls the transfer device 70, the movement mechanism 72 of the transfer device 70 is once unfolded and extended by the motor and then folded and retracted. As a result, the designated holder 9 held by the picker 71 is loaded into the designated hold shelf 56 and leaves the picker 71.

After the completion of the unloading operation, the control unit 4 supplies a signal indicating the end of operation to the computer 100.

### <Computer (machining control device)>

As shown in Figs. 1 and 2, the computer 100 has, for example, a CPU, a GPU, a ROM, a RAM, a bus, and a hardware interface. The computer 100 also has an onboard storage device 101 such as a semiconductor memory or a hard disk drive on which the computer 100 can read and write data. A CAM application program 102 is installed on the computer 100 and stored on the storage device 101. The CAM application program 102 is for causing the computer 100 to perform an operation to generate tool path data based on data (design data and CAD data) indicative of a shape of a machined product (such as a dental prosthesis) or a material information file and an operation to manage the material information file.

The data indicative of the shape of the machined product is generated in advance by a CAD application program and stored on the storage device 101. It should be noted that the CAD application program may be installed on the computer 100 and the data indicative of the shape of the machined product may be generated by the computer 100.

The material information file (material data) includes an identifier, material type data, thickness data, color data, and segment data, and these data are correlated with each other. The material type data is data representing the type of a material used for the workpiece 8. The type of the material of the workpiece 8 is identified based on the material type data. The thickness data represents the thickness of the workpiece 8. The thickness of the workpiece 8 is identified by the thickness data. The color data is data representing the color of the workpiece 8. The color of the workpiece 8 is identified by the color data. The segment data is data in which an area within a contour (a closed curved line such as a circle) of the workpiece 8 on a plane view of the workpiece 8 is divided into a machined area and an un-machined area, and the machined area and the un-machined area are distinguishable. For example, as shown in Fig. 5, the segment data is comprised of closed curved line data (such as an equation of a circle) representing coordinates of each point on a contour 8a of a workpiece model in a two-dimensional orthogonal coordinate system and closed curve data (such as an equation of a closed curved line) representing coordinates of each point on contours 8b of machined areas within the contour 8a. The area inside the contour 8a of the workpiece model and outside the contours 8b of the machined areas is an un-machined area.

The material information file is generated by the operation of the computer 100 achieved by the CAM application program 102 and stored on the storage device 101. The material information file has an identifier (written therein) in order to distinguish two or more material information files, if stored on the storage device 101, from each other. The identifier included in the material information file is a holder ID. This means that each material information file is correlated with a workpiece 8 held in a holder 9 having a holder ID 9a that is identical to the identifier of the material information file.

The computer 100 is connected to a display device 103 and an input device 104. The display device 103 is a display for displaying screens. The input device 104 may be a touch panel, a switch, a keyboard, a pointing device, an optical reader (such as a one-dimensional code reader and a two-dimensional code reader), a magnetic reader, or a wireless reader (such as an RFID reader).

### <Use of the machining system>

Use of the machining system is described. The operations of the computer 100 during the use of the machining system are performed according to the program 102.

### (1) Create a new material information file

First, the computer 100 causes the display device 103 to display a list. A user selects a material type, a thickness, and a color for an un-machined workpiece 8 from the list and enters them into the computer 100 via the input device 104. The computer 100 then receives the material type data, the thickness data and the color data from the input device 104 and generates new segment data. The new segment data does not contain any machined area and the entire area within the contour 8a of the workpiece model is thus an un-machined area.

The user attaches the workpiece 8 to a holder 9 and enters an identifier (hereinafter, referred to as an input holder ID) that is identical to the holder ID 9a of the holder 9 in question into the computer 100 via the input device 104. The computer 100 then acquires the input holder ID from the input device 104.

Next, the computer 100 correlates the input holder ID, the segment data, the material type data, the thickness data, and the color data with each other and record a new material information file including the input holder ID, the segment data, the material type data, the thickness data, and the color data on the storage device 101.

In this way, the material information file for each holder 9 is stored on the storage device 101 every time when the user attaches an un-machined workpiece 8 to a holder 9 and enters data.

### (2) Machine an un-machined workpiece and update the material information file

First, the user designates one of the material information files using the input device 104. The designated material information file has the input holder ID (written therein) identical to the holder ID 9a of the holder 9 (carrying the un-machined workpiece 8 attached thereto).

The computer 100 retrieves the material information file from the storage device 101 and that material information file is opened in the program 102. It should be noted that, at the time when the aforementioned new material information file is created, the segment data, the material type data, the thickness data, the color data, and the input holder ID which are correlated with each other during the creation of the new material information file may be used by the program 102 without storing the material information file on the storage device 101.

Next, the computer 100 causes the display device 103 to display the input holder ID, the type of the material, the thickness, and the color according to the material information file. Furthermore, the computer 100 causes the display device 103 to display a workpiece model diagrammatically representing the un-machined area based on the segment data in the material information file. At this point in time, no machined area is included in the segment data, so that the entire area of the workpiece model displayed on the display device 103 is the un-machined area.

Next, by using the program 102, tool path data is generated. Specifically, when the user designates data (design data and CAD data) indicative of a shape of a machined product stored on the storage device 101 via the input device 104, the computer 100 retrieves the data indicative of the shape from the storage device 101 and the data indicative of the shape is opened in the program 102. The data indicative of the shape of the machined product may be generated by a CAD application program and imported into the program 102. Alternatively, the data indicative of the shape of the machined product stored on a portable storage medium (such as a semiconductor memory) may be retrieved by the computer 100 and opened in the program 102.

Then, the computer 100 places, automatically or according to an instruction from the user, a machined product model based on the data indicative of the shape of the machined product in the un-machined area of the segment data. The computer 100 then generates tool path data according to the data indicative of the shape and the material information file. To do this, the computer 100 looks up the segment data of the material information file and generates the tool path data so that the machined product model based on the data indicative of the shape is located outside the machined area of the segment data. As described above, since no machined area is included in the segment data at this point in time, the tool path data is generated so that the machined product model based on the data indicative of the shape is located inside the contour of the workpiece model.

Next, the computer 100 updates the segment data of the material information file so that the machined product model based on the data indicative of the shape is regarded as the machined area.

Next, the computer 100 causes the display device 103 to display a workpiece model on which the machined area based on the updated segment data is diagrammatically represented.

Next, the user loads the holder 9 holding the workpiece 8 into a hold shelf 56. All holder shelves 56 may be loaded with the holders 9 or one or more holder shelves 56 may be left empty. The un-matched workpiece 8 is attached to one of the holders 9 held in the storage stand 55 and the holder ID 9a of that holder 9 is identical to the input holder ID displayed on the display device 103 (the input holder ID included in the material information file).

Thereafter, when the user enters a command to begin machining via the input device 104, the computer 100 transfers the input holder ID as the designated ID to the control unit 4 and also transfers the tool path data to the control unit 4. For example, a file including the tool path data and the input holder ID is transferred from the computer 100 to the control unit 4.

Furthermore, the computer 100 stores a material information file including the material type data, the thickness data, the color data and the updated segment data on the storage device 101. If a new material information file has not yet been stored on the storage device 101 during its generation as described above, the material information file is stored on the storage device 101 at this point in time, and if the material information file has been stored on the storage device 101 during its generation, the material information file on the storage device 101 is now updated.

By having the designated ID transferred to the control unit 4, the aforementioned loading operation, machining operation, and unloading operation are performed successively. The holder 9 having the holder ID 9a identical to the designated ID is thus loaded into the machining device unit 2 by the loading mechanism 3, and the workpiece 8 attached to that holder 9 is machined by the machining device unit 2. If a part of the workpiece 8 is left without being machined after the machining operation and the unloading operation, the workpiece 8 can be reused as a half-used workpiece 8. The half-used workpiece 8 is stored while leaving it in the holders 9. It may be either removed from the storage stand 55 or left in the storage stand 55 for storage. The material information file (which is stored on the storage device 101) correlated to the input holder ID identical to the holder ID 9a of the holder 9 to which the half-used workpiece 8 is attached includes the updated segment data as described above.

The computer 100 may correlate the generated tool path data with the input holder ID and store it on the storage device 101.

### (3) Machine a half-used workpiece and update the material information file

First, the user designates one of the material information files using the input device 104. The designated material information file has the input holder ID (written therein) identical to the holder ID 9a of the holder 9 (carrying the half-used workpiece 8 attached thereto).

The computer 100 retrieves the material information file from the storage device 101 and that material information file is opened in the program 102. The computer 100 causes the display device 103 to display the input holder ID, the type of the material, the thickness, and the color according to the material information file. Furthermore, the computer 100 causes the display device 103 to display a workpiece model diagrammatically representing the machined area and the un-machined area based on the segment data in the material information file.

Next, by using the program 102, tool path data is generated. Specifically, when the user designates data (design data and CAD data) indicative of a shape of a machined product stored on the storage device 101 via the input device 104, the computer 100 retrieves the data indicative of the shape from the storage device 101 and the data indicative of the shape is opened in the program 102. Then, the computer 100 places, automatically or according to an instruction from the user, a machined product model based on the data indicative of the shape of the machined product in the un-machined area of the segment data. The computer 100 then generates tool path data according to the data indicative of the shape and the material information file. To do this, the computer 100 looks up the segment data of the material information file and generates the tool path data so that the machined product model based on the data indicative of the shape is located outside the machined area (i.e., inside the un-machined area) of the segment data.

Next, the computer 100 updates the segment data of the material information file so that the machined product model based on the data indicative of the shape is regarded as the machined area.

Next, the computer 100 causes the display device 103 to display a workpiece model on which the machined area based on the updated segment data is diagrammatically represented.

Next, the user loads the holder 9 holding the workpiece 8 into a hold shelf 56. The half-used workpiece 8 is attached to one of the holders 9 held in the storage stand 55 and the holder ID 9a of that holder 9 is identical to the input holder ID displayed on the display device 103 (the input holder ID included in the material information file).

Thereafter, when the user enters a command to begin machining via the input device 104, the computer 100 transfers the input holder ID as the designated ID to the control unit 4 and also transfers the additional tool path data to the control unit 4.

Furthermore, the computer 100 updates a material information file including the material type data, the thickness data, the color data and the updated segment data on the storage device 101.

By having the designated ID transferred to the control unit 4, the aforementioned loading operation, machining operation, and unloading operation are performed successively. The holder 9 having the holder ID 9a identical to the designated ID is thus loaded into the machining device unit 2 by the loading mechanism 3, and the half-used workpiece 8 attached to that holder 9 is machined by the machining device unit 2.

### <Effects and advantages>

According to the aforementioned embodiment, following effects can be obtained.
(1) The holders 9 have their holder IDs 9a and the computer 100 can identify the material information files according to the input holder IDs. Each material information file is correlated with a holder 9 and a workpiece 8. Therefore, each workpiece 8 can be machined according to a correct material information file.
(2) Since the holder IDs 9a of the holders 9 in the loading mechanism 3 are read by the reader 80, it is possible to identify a holder 9 whichever hold shelf 56 the holder 9 is held in. Therefore, a correct holder 9 having the holder ID 9a identical to the designated ID and a correct workpiece 8 held in it can be loaded into the machining device unit 2.
(3) Since the workpiece 8 held in the holder 9 will not be transferred to another holder 9 before it is consumed, a half-used workpiece 8 can be machined according to a correct material information file.

### === Modified version ====

While the embodiment for carrying out the present invention has been described, the embodiment is for facilitating understanding of the present invention and is not intended to limit the present invention, which is defined by the appended claims.

(1) The loading mechanism 3 may be changed into a rotary loading mechanism.
(2) In the aforementioned embodiment, the moving unit 41, the tilt mechanism 42, and the holding member 48 are moved by the X-directional linear driving mechanism 40 along the X-axis. In place of the moving unit 41, however, a fixed unit may be attached and secured to the housing 10 and the tilt mechanism 42 and the holding member 48 may be disposed on the fixed unit as in the case where they are disposed on the moving unit 41 as described above. In this case, the linear guide member 21, the carriage 22, the Y-directional linear transmission mechanism 23, and the motor 24 are driven collectively by the X-directional linear driving mechanism so that they move in the X-direction.
(3) In the aforementioned embodiment, the tool holding member 34 is moved by the Y-directional linear driving mechanism 20 in the Y-direction. The carriage 22 of the linear driving mechanism 20 may, however, be a fixed unit secured to, for example, the center of the linear guide member 21 so that the tool holding member 34 is not moved in the Y-direction. In this case, a linear driving mechanism along the Y-axis is separately disposed in the housing 10. The X-directional linear driving mechanism 40 is connected to the Y-directional driving mechanism, and the linear driving mechanism 40, the moving unit 41, the tilt mechanism 42, and the holding member 48 are driven collectively by the Y-directional linear driving mechanism so that they move in the Y-direction.
(4) In the aforementioned embodiment, the tool holding member 34 and the spindle motor 32 are moved by the linear driving mechanism 30 in the Z-direction. The tool holding member 34 and the spindle motor 32 may, however, be fixed to the carriage 22 so that the tool holding member 34 and the spindle motor 32 are not moved in the Z-direction. In this case, a Z-directional linear driving mechanism is provided between the X-directional linear driving mechanism 40 and the moving unit 41, and the moving unit 41, the tilt mechanism 42, and the holding member 48 are driven collectively by the Z-directional linear driving mechanism so as to move in the Z-direction.

## Claims

1. A machining control device comprising:
acquisition means for acquiring a unique identifier of a workpiece-attachable and - detachable holder (9);
generating means for generating material data for a workpiece (8) attached to the holder (9); and
recording means for recording, on a storage medium, the unique identifier acquired by the acquisition means and the material data generated by the generating means with the unique identifiers and the material data being correlated to each other,
**characterized in that**
the material data includes segment data in which an area within a contour (8a) of the workpiece (8) on a plane view of the workpiece (8) is divided into a machined area and an un-machined area, and
the machined area and the un-machined area are distinguishable, and
the material data further includes an identifier, material type data, thickness data, and color data.

2. The machining control device according to claim 1, further comprising:
retrieving means for retrieving, from the storage medium, a material data correlated to an identifier that is identical to the unique identifier; and
tool path data generating means for generating tool path data based on the material data retrieved by the retrieving means and data indicative of a shape of the workpiece (8).

3. The machining control device according to claim 2, further comprising:
updating means for updating the segment data in the material data recorded on the storage medium based on the data indicative of the shape of the workpiece, wherein
the retrieving means is also means for retrieving, from the storage medium, the updated material data correlated to the identifier; and
tool path data generating means is also means for generating tool path data based on the updated material data retrieved by the retrieving means and data indicative of a shape of another workpiece.

## Patentansprüche

1. Eine Bearbeitungssteuerungsvorrichtung umfassend:
ein Erfassungsmittel zum Erfassen einer eindeutigen Kennung eines an einem Werkstück anbringbaren und abnehmbaren Halters (9);
ein Erzeugungsmittel zum Erzeugen von Materialdaten für ein an dem Halter (9) befestigtes Werkstück (8); und
ein Aufzeichnungsmittel zum Aufzeichnen der durch die Erfassungsmittel erfassten eindeutigen Kennung und der durch die Erzeugungsmittel erzeugten Materialdaten auf einem Speichermedium, wobei die eindeutigen Kennungen und die Materialdaten miteinander korreliert werden,
**gekennzeichnet dadurch, dass**
die Materialdaten Segmentdaten enthalten, in denen ein Bereich innerhalb einer Kontur (8a) des Werkstücks (8) in einer ebenen Ansicht des Werkstücks (8) in einen bearbeiteten Bereich und einen unbearbeiteten Bereich unterteilt ist, und der bearbeitete Bereich und der unbearbeitete Bereich unterscheidbar sind, und
die Materialdaten ferner einen Bezeichner, Materialtypdaten, Dickendaten und Farbdaten umfassen.

2. Die Bearbeitungssteuerungsvorrichtung gemäß Anspruch 1, des Weiteren umfassend:
eine Abrufeinrichtung zum Abrufen von Materialdaten aus dem Speichermedium, die mit einer Kennung korrelieren, der mit der eindeutigen Kennung identisch ist; und
eine Werkzeugbahndaten-Erzeugungseinrichtung zum Erzeugen von Werkzeugbahndaten auf der Grundlage der durch das Abrufmittel abgerufenen Materialdaten und Daten, die eine Form des Werkstücks (8) anzeigen.

3. Die Bearbeitungssteuerungsvorrichtung gemäß Anspruch 2, des Weiteren umfassend:
Aktualisierungsmittel zum Aktualisieren der Segmentdaten in den auf dem Speichermedium aufgezeichneten Materialdaten auf der Grundlage der die Form des Werkstücks anzeigenden Daten, wobei
das Abrufmittel auch ein Mittel zum Abrufen der aktualisierten Materialdaten, die mit der Kennung korrelieren, aus dem Speichermedium ist; und
die Werkzeugbahndaten-Erzeugungseinrichtung auch eine Einrichtung zum Erzeugen von Werkzeugbahndaten auf der Grundlage der aktualisierten Materialdaten, die durch die Abrufeinrichtung abgerufen wurden, und Daten, die eine Form eines anderen Werkstücks anzeigen, ist.

## Revendications

1. Dispositif de commande d'usinage, comprenant :
un moyen d'acquisition pour acquérir un identifiant unique d'un dispositif de maintien pouvant être attaché et détaché d'une pièce (9) ;
un moyen de génération pour générer des données de matériau pour une pièce (8) attachée au dispositif de maintien (9) ; et
un moyen d'enregistrement pour enregistrer, sur un support de stockage, l'identifiant unique acquis par le moyen d'acquisition et les données de matériau générées par le moyen de génération, les identifiants uniques et les données de matériau étant corrélés les uns aux autres,
**caractérisé en ce que**
les données de matériau comprennent des données de segment dans lesquelles une zone à l'intérieur d'un contour (8a) de la pièce (8) dans une vue en plan de la pièce (8) est divisée en une zone usinée et une zone non usinée, et la zone usinée et la zone non usinée peuvent être distinguées, et
les données de matériau comprennent en outre un identifiant, des données de type de matériau, des données d'épaisseur et des données de couleur.

2. Dispositif de commande d'usinage selon la revendication 1, comprenant en outre :
un moyen d'extraction pour extraire, dans le support de stockage, des données de matériau corrélées à un identifiant qui est identique à l'identifiant unique ; et
un moyen de génération de données de trajectoire d'outil pour générer des données de trajectoire d'outil sur la base des données de matériau extraites par le moyen d'extraction et de données indicatives de la forme de la pièce (8).

3. Dispositif de commande d'usinage selon la revendication 2, comprenant en outre :
un moyen de mise à jour pour mettre à jour les données de segment dans les données de matériau enregistrées sur le support de stockage sur la base des données indicatives de la forme de la pièce, dans lequel
le moyen d'extraction est également un moyen pour extraire, sur le support de stockage, les données de matériau mises à jour corrélées à l'identifiant, et
le moyen de génération de données de trajectoire d'outil est également un moyen pour générer des données de trajectoire d'outil sur la base des données de matériau mises à jour extraites par le moyen d'extraction et de données indicatives de la forme d'une autre pièce.
